Europäisches Patentamt

European Patent Office

Office européen des brevets

(19)

(11) Publication number : **0 168 339 B2**

# (12) NEW EUROPEAN PATENT SPECIFICATION

(45) Date of publication of the new patent specification : **01.07.92 Bulletin 92/27**

(51) Int. Cl.⁵ : **B65G 15/08**

(21) Application number : **85630112.2**

(22) Date of filing : **12.07.85**

(54) A folding belt conveyor and said belt.

(30) Priority : **13.07.84 US 630786**

(43) Date of publication of application :
**15.01.86 Bulletin 86/03**

(45) Publication of the grant of the patent :
**11.01.89 Bulletin 89/02**

(45) Mention of the opposition decision :
**01.07.92 Bulletin 92/27**

(84) Designated Contracting States :
**DE FR GB IT**

(56) References cited :
**DE-A- 1 934 342**
**DE-B- 1 000 279**
**GB-A- 1 400 555**
**GB-A- 2 061 853**
**US-A- 4 000 809**

(73) Proprietor : **THE GOODYEAR TIRE & RUBBER COMPANY**
**1144 East Market Street**
**Akron, Ohio 44316-0001 (US)**

(72) Inventor : **Candle, Richard Donald**
**2310 Briner Avenue**
**Akron Ohio 44305 (US)**

(74) Representative : **Körber, Wolfhart, Dipl.-Ing. et al**
**Patentanwälte Mitscherlich & Partner**
**Steinsdorfstrasse 10**
**W-8000 München 22 (DE)**

## Description

This invention relates to a conveying apparatus including an endless driven belt as described in the preamble of claim 1. Such a conveying apparatus is for example described in GB-A 2 061853.

The conventional flexible belt conveyor systems are open and thus the material carried on the belt can be contaminated by rain, dust end related contaminants as the conventional belt is open to the atmosphere. Consequently, the trade has resorted to metal shrouding or related enclosure means to protect the belt from contamination, but this shrouding increases the volume for the accumulation of dust and thereby allows for the creation of large masses of explosive mixtures. Although the folding conveyor systems are known, these systems require special hardware for the conveyor system such as the special hardware of GB-A-2 061853 where the conveying apparatus includes an endless driven conveyor belt which is rollable into a closed tubular form by the action of a series of surrounding support rollers positioned at intervals along the belt.

The conveyor apparatus of the present invention as claimed in appended claim 1 provides a closed belt conveyor system which does not require special hardware and can easily be installed on existing conventional conveyor systems. The conveyor system of the present invention is adapted to move a folding conveyor belt by means of the usual drive rolls while supported on idler rolls and has a folding belt which in one view is a conventional belt having a pair of continuous, flexible, longitudinal cover flaps attached hingeably along each longitudinal edge of said belt to permit the flaps to be folded to fully cover the load and confine the material being conveyed on the belt or to move the axially unfolded position. This folding belt may be loaded with the cover flaps unfolded to the fully opened position or with the cover flaps unfolded only sufficiently to permit on-loading of the material. The width W, of a folding belt is defined as the distance between the two longitudinal hinges. This dimension W defines the conveying capacity of the belt at a specifed speed. First, the inherent containment provided by the cover flaps allows a fold belt to be loaded all the way to its hinge area, thus eliminating the unused edge distance required by conventional belting to prevent spillage. This allows a fold belt to carry a substantially greater load than a conventional belt on the same width conveyor system. Thus, a folding belt conveyor system with a belt width of W can carry a larger load than a conventional belt of the same width of W. At its minimum and maximum capacity the folding belt can carry a load respectively 50 and 100 percent more relative to the conventional belt of the same width W and also protect the load from external contamination. In addition, the enclosed load feature of the folded belt can substantially reduce the need for metal shrouding in applications where dust is a problem. This also offers many advantages including easier conveyor maintenance and reduced dust collecting systems requirements. The result can be improved conveyor safety and reduced costs. And finally, by containing the load with its flaps, a fold belt is able to convey materials up steeper, inclines and operate at higher speeds with has spillage than conventional belts. Consequently, conveyor operation time can be reduced while efficiency is increased.

The nature of this invention and its advantages and benefits can be seen and understood by reference to the drawings wherein:

Figure 1 is a schematic plan view of the conveying apparatus of this invention.

Figure 2 is a schematic elevational view of the apparatus having a tensioning means in the tail terminal.

Figure 3 is a schematic elevational view of the apparatus of Figure 1 having the tensioning means near the head terminal.

Figure 4 is a cross-sectional view through Figure 1 along lines 4 -4 showing the minimum and maximum additional load carrying capacity aspect of the conveying apparatus.

Figure 5 is an enlarged view of the transition area of the conveying apparatus showing the width of the terminal pulley and the idler rolls relative to W, the width of the belt between the fold lines.

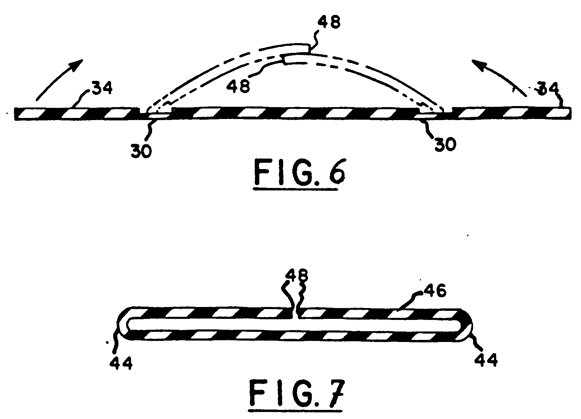

Figure 6 is a cross-sectional view of a conventional belt which has had two longitudinal sections removed to form the fold lines.

Figure 7 is a cross-sectional view showing a conventional belt partially cured and folded over to form two fold lines and then fully cured in this position to yield a folded belt.

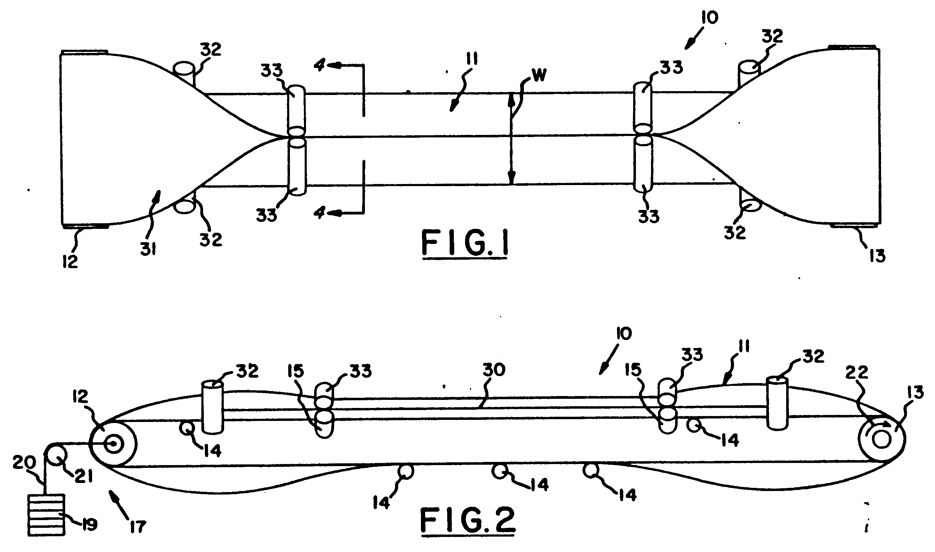

Referring to the drawings and specifically figures 1, 2, and 3 a folding belt conveyor 10 is shown in schematic outline where numeral 11 designates the folding belt. The belt 11 passes over a head roll, herein designated as pulley 13, and a tail roll herein designated as pulley 12.

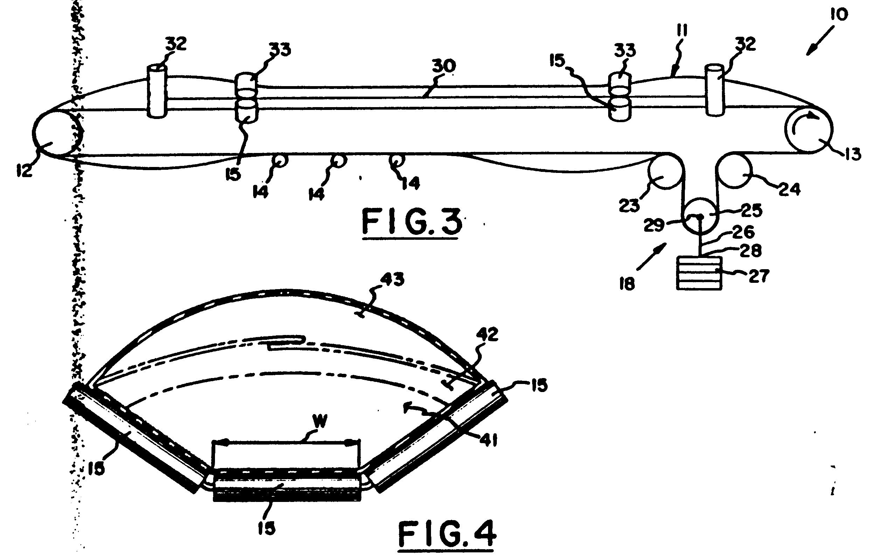

These head and tail rolls are sometimes called terminals. The belt intermediate the head and tail terminals is supported by a series of conventional idler rolls 14 as best seen in Figures 2 and 3. Preferred forms of the idler roll as shown in Figure 4 comprise three in line rolls 15 mounted to cause the belt to form the conventional trough shape. It should be appreciated that roles 14 can be straight or any other shape in conveyor usage. Also, the conveyor system may have tension means such as the ones shown in Figures 2 and 3 and designated generally as a tail tension means 17 and a head tension means 18. The amount of tension on the tail roll 12 is controlled by applying weights 19 to the tension member 20 usually a chain, rope, or cable that passes over tension pulley 21 and has one end attached to the tail roll 12 in a manner to permit the tail roll 12 to rotate under suitable rotation means such as a motor driven roll (not shown) and thus moves the belt in the direction indicated by arrow 22. The tension system used at the head end preferably is positioned as shown in Figure 3 as this allows the load on the belt to be discharged without being obstructed by the tension means. The tension means shown in Figure 3 comprises rolls 23 and 24 having a tension roll 25 positioned between rolls 23 and 24 to pull the belt down tight in the manner shown in Figure 3. The amount of pull down or tension applied to the belt is a function of the amount of weights 27 attached to one end 28 of tension member 26 and having its other end 29 attached rotatably to tension roll 25.

Referring again to Figure 1, the folding belt 11 is unfolded 31 as it passes around tail roll 12 and head roll 13. Therefore, the tail roll 12 and the head roll 13 has to be least twice the width of the belt between the fold lines 30. Also, the head and tail rolls are twice width of the idler rolls 14. The tension on the folding belt tends to cause the belt to want to fold inwardly, but to insure its proper folding and unfolding, it is essential that the belt have a transition distance of 7 to 15 times W of travel from the head and tail pulleys. The belt is supported by troughing idler rolls as needed throughout the transition length.

A folding belt conveyor system according to this invention in its preferred embodiment requires head and tail pulleys that are twice as wide as the systems idler rolls and a transition area at both head and tail ends. This embodiment of the invention permits an existing conveyor system to be modified in two ways to provide a facility in accordance with the instant invention, namely, the head and tail pulleys of a conventional conveyor system are replacad with head and tail pulleys twice as wide and are provided with loading and unloading transition areas to provide for opening the belt as it passes over the tail and head pulleys to permit the belt to be loaded and unloaded. Alternately, the conventional belt system can be altered by leaving the head and tail pulleys the same, but modify the idlers to half their original width and provide transition loading and unloading areas. Naturally the preferred modification is where the head and tail pulleys are enlarged as in the first modification, but the second modification would be desirable where space limitations makes providing the wider heads and tail pulleys undesirable.

Referring to Figures 2 and 3, to insure proper folding and unfolding of the belt, idler rolls 14 and troughing idler rollers 32 may be positioned in the transition length to aid in the support of the open belt. Closing rollers 33 may be placed along the closed portion of the folding belt to aid in keeping the belt closed and especially is this desirable on steep grades of 30 to 45° or more such as where the conveyor is operating in an open pit mine or on a grain elevator.

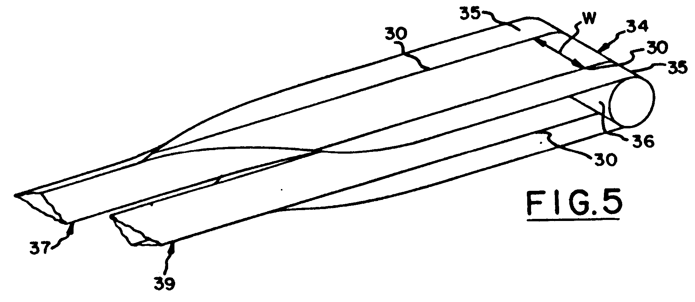

The nature of the transistion area is more clearly shown in Figure 5. The terminal roll either head 13 or tail 12 has the belt passing around it in the unfolded or flat position 34 showing the flaps 35 unfolded about fold lines 30 to rest in contact with the surface 36 of the respective head or tail pulleys. As indicated before the tension applied to the belt in the transition area and construction of the belt with fold lines cause the belt as it moves toward the head or tail roll to open as shown in Figure 5 where the belt moves from the fully closed position 37 to the fully open position. Then as the belt passes the head roll 13 and loses its load of bulk material it slowly closes to present the fully closed position 39 on the return run.

In general, the conveyor system of this invention will be about 250 to 1000 or more meters, and will permit greater loads to be carried on the belt as illustrated by Figure 4 where numeral 41 indicates the maximum load carrying capacity of a conventional belt and numerals 42 and 43 respectively designate the minimum and maximum capacities of the folding belt of this invention. For these greater loads the drive systems of the belt must be sufficient to handle the increased load end speed of the belt. The drive system, motors, etc.; are well known and need no description to those skilled in the conveyor belt art or how to calculate required power for the loads to be handled.

Although this invention has been described in straight runs, those of ordinary skill will readily appreciate that the system could be operated around curves with properly banked lateral turns. Likewise, where steep angle conveying is desired, the usual devices such as cover belts, hugger belts, rubber covered drums or rolls, etc., may be used, but for normal operations they are not essential.

A reinforced plastic or elastomeric belt especially useful in this invention such as a conventional belt plied up of conventional rubbers such as a sulfur carbon black butadiene. styrene or butadiene acrylonitrile rubber was cured at elevated temperature, about 40°C-190°C, to 40-60% of its cure in the flat unfolded open position with longitudinal hinge areas molded into the belt as shown by lines 44 of Figure 7. Then the hinge areas were formed by folding the flaps 46 over to bring the edges in to the laid over position 48. A shim or a flat strip of steel (not shown) may be used during the initial molding step to aid in folding the edges over and forming a straight grooved fold line longitudinally of the belt. The press was closed on the folded belt and the cure finished at elevated temperature to give a fully cured folded belt of Figure 7. It is preferred that the flaps 46 in the laid over position have their ends 47 lap over so the conveyor is completely closed. Talc and related mold releases may be used to prevent sticking to the mold or the rubber sticking to itself. A belt made as above was vulcanized spliced to give a continuous belt which was tested on the Herman Morse belt tester for the equivalent of 486 hours at a speed of about 800 meters per minute with the flaps open at the head pulley, but closed at the tail pulley. Normal test conditions on the Herman Morse belt tester its 500 hours at 800 meters per minute. This embodiment performed satisfactory on the Herman Morse belt tester. It was observed during test runs that the use of a silicone oil lubricant on the edges of the flaps reduce belt wear. Also, the test belt could be used for much longer runs as there was no evidence of belt failure.

A fully cured conventional rubber multiple plied up coal belt, i.e. a sulfur cured natural rubber fabric belt was grooved by slitting longitudinally through the first layer of rubber to form two parallel axial fold lines 47. Then the rubber was removed through the first layer or ply to give a fold line area about 2.5 centimeters wide, and two plys thick. It was removed preferably by pulling the cut strip away or by abrading away with an abrader. Multiple plied bens should be reduced to two plys in the hinge area for preferred embodiments. This cut grooved belt was run on the Herman Morse belt tester and was found to give satisfactory service when operated according to this invention.

Another suitable embodiment is a hinge groove which is molded into the belt cover during cure. The key to this technique is to use a suitably shaped molding device which displaces enough of the conventional multiple ply belts top cover and compresses the multiple plied belt constructions so as to form a preferentially flexible, grooved hinge area, preferably about 1-4 cm wide and 0.1-2 cm deep. Alternatively, this technique may be utilized by partially curing the belt with the molded groove hinges and then folding the partially cured belt at the hinges and finishing the cure while folded. This provides a fold belt with self closing hinged cover flaps as shown in Figure 7 usually of at least one-half w in width. The fold belt will, for most services, be returned with the cover flaps closed to provide a clean return, minimize idler wear, and minimize the width of the return idlers and the conveying structure. The fold belt can be driven and/or run on pulleys with the flaps in the fully open, flat position (preferred), or with the flaps in the fully closed position folded over, on top of the fold belt as it goes around a pulley, but never in the fully closed position, folded under, on the bottom of the fold belt as it goes around a pulley.

## Claims

1. A conveyor apparatus (10) including a tail terminal (12) at one end and a head terminal (13) at the other end thereof, an endless driven flat conveyor belt (11) having straight edge portions and passing around said terminals (12, 13), support rolls (32) to support said belt (11) foldable within a transition distance between an extended flat configuration in the area of each of said terminals (12, 13) and an inwardly closed configuration in the area therebetween, a drive means connected driveably in cooperative actions with said belt (11), means to load and means to unload said belt (11), with said means to unload said belt (11) being positioned at the head terminal, **characterized** by the straight edge portions of the belt consisting of a pair of longitudinal spaced apart flaps (35) foldable about longitudinal fold axes (30), which have been defined at the point of manufacture, and by at least two support rolls (32) provided within said transition distance at both sides of said belt (11) in an inclined position so as to fold said flaps (35) upwardly and then under the tension applied to said belt (11) in the transition area inwardly into the fully closed configuration.

2. A conveying apparatus (10) according to claim 1 characterized by said belt (11) being under sufficient tension to cause the belt (11) to run in essentially a closed position over the distance between lines displaced 7 to 15xW from each terminal where W its the width of the belt (11) between said belt fold axes (30).

3. A conveying apparatus (10) according to claims 1 or 2 characterized in that the belt (11) moves under sufficient tension to keep the belt (11) essentially closed along its path except a distance of about 7 to 15xW on either side of the head terminal (13) and a distance of about 3.5 to 7.5 W on each side of a feed chute (40) at the tail terminal (12) where W is the width of the belt between said belt fold axes (30).

4. A conveying apparatus (10) according to any of the preceding claims, characterized in that the edges of the flaps and the fold line (44) are coated with a silicone lubricant.

5. A conveying apparatus (10) according to any of the preceding claims, characterized in that the width of the idler rolls (14) is about half that of the tail roll (32).

6. A conveying apparatus (10) according to any of the preceding claims, characterized in that the support rolls are straight idler rolls (14) outside the transition zone.

7. Conveying apparatus according to any of the preceding claims, characterized in that the belt is a flat belt and that the longitudinal folding axes consist of grooves

8. A conveying apparatus according to any of the preceding claims, characterized in that the belt is a reinforced plastic or elastomeric belt.

9. A conveyor belt according to claims 7 or 8, characterized in that the longitudinal folding axes are situated at a distance 1/2 W from the respective longitudinal edges of the belt.

10. A method of making a conveyor belt (11) according to claim 7 or 9 for use in the conveying apparatus (10) of any of claims 1 to 6, characterized in that the belt is provided with grooves by removing away part of two longitudinal sections of the cured belt (11).

11. A method of making a conveyor belt for use in the convoying apparatus 10 according to any of the preceding claims, characterized by pressing a reinforced plastic or elastomeric belt in flat position at an elevated temperature to produce a set or cure of about 40 to 60 percent and folding the belt to form two fold lines 44 and then further pressing the folded belt at elevated temperatures to further cure or set the belt 11 at the fold lines 44.

**Patentansprüche**

1. Eine Fördervorrichtung (10)
mit
einem hinteren Abschluß (12) an deren einem Ende und einem vorderen Abschluß (13) an deren anderem Ende, einem endlosen angetriebenen flachen Förderband (11), das gerade Randzonen aufweist und um die Abschlüsse (12, 13) umläuft,
Stützrollen (32) zum Abstützen des Bandes (11), das innerhalb einer Übergangsstrecke zwischen einer ausgebreiteten flachen Konfiguration im Bereich jedes Abschlusses (12, 13) und einer nach einwärts geschlossenen Konfiguration im dazwischenliegenden Bereich faltbar ist,
einer Antriebseinrichtung, die in zusammenwirkender Weise in Antriebsverbindung mit dem Band (11) steht, einer Einrichtung zum Beladen und einer Einrichtung zum Entladen des Bandes (11), wobei die Einrichtung zum Entladen des Bandes (11) am vorderen Abschluß angeordnet ist,
**dadurch gekennzeichnet**, daß die geraden Randzonen des Bandes aus einem Paar in Längsrichtung voneinander beabstandeter Klappen (35) bestehen, die um längsverlaufende, zum Zeitpunkt der Herstellung ausgebildete Faltachsen (30) faltbar sind, und daß wenigstens zwei Stützrollen (32) innerhalb der Übergangsstrecke an beiden Seiten des Bandes (11) in einer schräggestellten Position so vorgesehen sind, daß sie die Klappen (35) nach oben und dann unter der im Übergangsbereich auf das Band (11) aufgebrachten Spannung nach einwärts in die völlig geschlossene Konfiguration falten.

2. Fördervorrichtung (10) nach Anspruch 1, dadurch gekennzeichnet, daß das Band (11) ausreichende Spannung aufweist um zu bewirken, daß das Band (11) im wesentlichen in geschlossener Position über den Abstand zwischen Linien läuft, die 7 bis 15 x W von jeder Walze beabstandet sind, wobei W die Breite des Bandes zwischen den Bandfaltachsen (30) ist.

3. Fördervorrichtung (10) nach Anspruch 1 oder 2, dadurch gekennzeichnet, daß das Band (11) unter ausreichender Spannung läuft, um das Band (11) im wesentlichen längs seines Weges geschlossen zu halten mit Ausnahme einer Strecke von etwa 7 bis 15xW jeder Seite des Kopfbereiches (13) und einer Strecke von etwa 3,5 bis 7,5 W auf jeder Seite einer Beschickungsrutsche (40) an dem Endbereich (12), wobei W die Breite des Bandes zwischen den Bandfaltachsen (30) ist.

4. Födervorrichtung (10) nach einem der vorhergehenden Ansprüche, dadurch gekennzeichnet, daß die Ränder der Klappen und die Faltlinie (44) mit einem Silikonschmiermittel beschichtet sind.

5. Fördervorrichtung (10) nach einem der vorhergehenden Ansprüche, dadurch gekennzeichnet, daß die Breite der Mitlaufrollen (14) etwa die Hälfte der Breite der Endwalze (32) ist.

6. Fördevorrichtung (10) nach einem der vorhergehenden Ansprüche, dadurch gekennzeichnet, daß die Stützrollen geradlinige Leerlaufrollen (14) außerhalb der Übergangszone sind.

7. Fördervorrichtung nach einem der vorhergehonden Ansprüche, dadurch gekennzeichnet, daß das Band ein flaches Band ist und daß die Längsfaltachsen aus Nuten bestehen;

8. Fördervorrichtung nach einem der vorhergehenden Ansprüche, dadurch gekennzeichnet, daß das Band ein Verstärkes Kunstsoff-oder elastomeres Band ist.

9. Förderband nach Anspruch 7 oder 8, dadurch gekennzeicchnet, daß die Längsfaltachsen in einem Abstand 1/2 W von dem jeweiligen Seitenrand des Bandes angeordnet sind.

10. Verfahren zur herstellung eines Förderbandes (11) nach Anspruch 7 oder 9 zur verwendung in der fördervorrichtung (10) nach einem der Ansprüche 1 bis 6, dadurch gekennzeichnet, daß das Band mit Nuten versehen wird durch Entfernung von Teilen zweier Längsbereiche des ausgehärteten oder vulkanisierten Bandes (11).

11. Verfahren zur Herstellung eines Förderbandes zu Verwendung in der Fördervorrichtung (10) nach einem der vorhergehenden Ansprüche, gekennzeichnet durch Pressen eines verstärkten Kunststoff-oder elastomeren Bandes in ein flache Lage bei einer erhöhten Temperatur zur Erzeugung eines Aushärtens oder Vulkanisierens von etwa 40% bis 60% und Falten des Bandes zur Ausbildung zweier Faltlinien (44) und danach Pressen des gefalteten Bandes bei erhöhten Temperaturen, um das Band (11) an den Faltlinien (44) weiter zu vulkanisieren oder auszuhärten.

## Revendications

1. Appareil transportant (10) comprenant
une terminaison de queue (12) à une extremité et une terminaison de tête (13) à l'autre extrémité, une courroie transporteuse sans fin entraînée platte (11) comportant des parties marginales droites et passant autour de ces terminaisons (12, 13),
des rouleaux de support (32) pour soutenir cette courroie (11) pliable au dedans d'une distance de transition entre une configuration étendue platte dans la région de chacunes de ces terminaisons (12, 13) et une configuration fermée vers l'intérieur dans la région entre les deux,
un moyen d'entrainement relié à cette courroie de façon à pouvoir être entraîné en concert avec celle-ci (11),
des moyens en vue de charger et des moyens en vue de décharger cette courroie (11), ces moyens en vue de décharger la courroie (11) étant positionnés à la terminaison de tête,
**caractérisé** en ce que les parties marginales droites de la courroie consistent en une paire de pattes (35) séparées longitudinalement et pouvant être pliées autour d'axes longitudinaux de pliage (30), ces axes ayant été définies au moment de la fabrication, et par au moins deux rouleaux de support (32) prévus au dedans de cette distance de transition aux deux côtés de cette courroie (11) dans une position inclinée de façon à plier ces pattes (35) vers le haut et ensuite, sous la tension appliquée à cette courroie (11) dans une configuration complètement fermée vers l'intérieur, dans la région de transition.

2. Appareil transporteur (10) selon la revendication 1, caractérisé on ce que la courroie (11) est soumise à une tension suffisante pour lui permettre de défiler dans une position essentiellement fermée sur la distance comprise entre des lignes écartées de 7 à 15xW de chaque terminaison, W étant la largeur de la courroie (11) comprise entre les axes de pliage (30) de la courroie.

3. Appareil transporteur (10), selon l'une quelconque des revendications 1 ou 2, caractérisé en ce que la courroie (11) se déplace en étant soumise à une tension suffisante pour la maintenir essentiellement fermée le long de son parcours, excepté sur une distance d'environ 7 à 15 x W sur chaque côté de la terminaison de tête (13) et sur une distance d'environ 3, 5 à 7,5 W sur chaque côté d'un couloir d'alimentation (40) situé à la terminaison de queue (12), W étant la largeur de la courroie entre les axes de pliage (30) de celle-ci.

4. Appariel transporteur (10) selon l'une quelconque des revendications précédentes, caractérisé en ce que les bords des pattes et la ligne pliée (44) son revêtus d'un librifiant de silicone.

5. Appareil transporteur (10) selon l'une quelconque des revendication précedentes, caractérisé en ce que la largeur de rouleaux foux (14) représente environ la moitié de celle du rouleau de queue (32).

6. Appareil transporteur (10) selon l'une quelconque des revendication prédédentes, caractérise en ce que les rouleaux de support sont des rouleaux fous rectilignes (14) situés en dehors de la zone de transition.

7. Appareil transporteur selon l'une quelconque des revendications précédentes, caractérisé en ce que la courroie est une courroie plate et en ce que les axes de pliage longitudinaux mont des rainures.

8. Appareil transporteur selon l'une quelconque des revendications précédentes, caractérisé en ce que la courroie est une courroie on matière élastomère ou en matière plastique renforcée.

9. Appareil transporteur selon les revendications 7 ou 8, caractérisé en ce que les axes de pliage longitudinaux sont situés à une distance de l'ordre de 1/2 W des bords longitucinaux respectifs de la courroie.

10. Procédé de fabrication d'une courroie transporteuse (11) selon la revendication 7 ou 9, destinée à être utilisée dans l'appareil transporteur (10) selon l'une quelconque des revendications 1 à 6, caractérisé en ce que la courroie est munie de rainures en enlevant une partie des deux sections longitudinales de la courroie vulcanisée (11).

11. Procédé de fabrication d'une courroie transporteuse destinée à être utilisée dans l'appareil transporteur (10) selon l'une quelconque des revendications précédentes, caractérisé en ce qu'il comprend les étapes consistant à presser une courroie en matière elastomère ou en matière plastique renforcée en position aplatiè à une température élevée en vue de produure un durcissement ou une vulcanisation d'environ 40 à 60%, et à plier la courroie en vue de former deux lignes de pliage (44), et ensuite à presser davantage la courroie pliée à des températures élevées pour vulcaniser ou durcir plus encore la courroie (11) aux lignes de pliage (44).

FIG.1

FIG.2

7

FIG.3

FIG.4

FIG.5

FIG. 6

FIG. 7